# EUROPEAN PATENT SPECIFICATION

(11) **EP 1 150 441 B1**
(45) Date of publication and mention of the grant of the patent: **26.03.2014**
(21) Application number: 00440115.4
(22) Date of filing: 25.04.2000
(51) Int. Cl.: H04B 7/08

(54) **Method and receiver for combining at least two received signals of a telecommunication system**
Verfahren und Empfänger zur Kombinierung von mindestens zwei empfangenen Signalen eines Telekommunikationssystems
Procédé et récepteur de combinaison d'au moins deux signaux reçus d'un système de télécommunication

(43) Date of publication of application: 31.10.2001
(73) Proprietor: Alcatel Lucent, 75007 Paris (FR)
(72) Inventor: Schreiner, Matthias, Dipl.-Ing., 71272 Renningen (DE); Schütz, Thomas, Dipl.-Ing., 76135 Karlsruhe (DE)
(74) Representative: Wetzel, Emmanuelle

(56) References cited:
- EP-A- 0 951 152
- WO-A-98/53560
- US-A- 5 710 995

## Description

The invention relates to a method of combining at least two received signals of a telecommunication system according to the preamble of claim 1. The invention also relates to a receiver of a telecommunication system for combining at least two received signals according to the preamble of claim 4.

Such method and receiver is known from WO 98/53560 A. There, two received signals are provided to two combining algorithms which create two resulting signals which are then combined.

Further prior art is known from EP-A-951 152.

A number of different combining algorithms are available. Some of them are well adapted to overcome e.g. a local interferer and others are good for overcoming e.g. noise. The problem of the known technique, therefore, is the question which combining algorithm should be used.

It is an object of the invention to offer a method and a receiver for combining at least two received signals in a telecommunication system which are well adapted to any possible situation, i.e. noise or a local interferer.

This object is solved by the method of claim 1 and by the receiver of claim 4.

This solution has the advantage that in a situation in which any of the two algorithms provides an advantage, the advantages of both algorithms may be used due to the claimed combination.

The invention provides the further advantage that several algorithms are available due to the claimed flexible combining strategy. Compared to the prior art, the invention therefore always provides a better adaptation to any actual situation due to the possibility of always providing the best algorithm for the respective actual situation.

In particular, it is advantageous if one of the two algorithms is a temporal reference algorithm and the other one of the two algorithms is a spatial reference algorithm.

Further embodiments as well as further advantages of the invention are outlined in the following description of the enclosed figures.
- Figure 1: shows a schematic block diagram of a first example of a method of combining two received signals of a telecommunication system
- Figure 2: shows a schematic block diagram of a second example of a corresponding method according to the invention, and
- Figure 3: shows a schematic block diagram of an embodiment of a method of combining two received signals of a telecommunication system according to the invention.

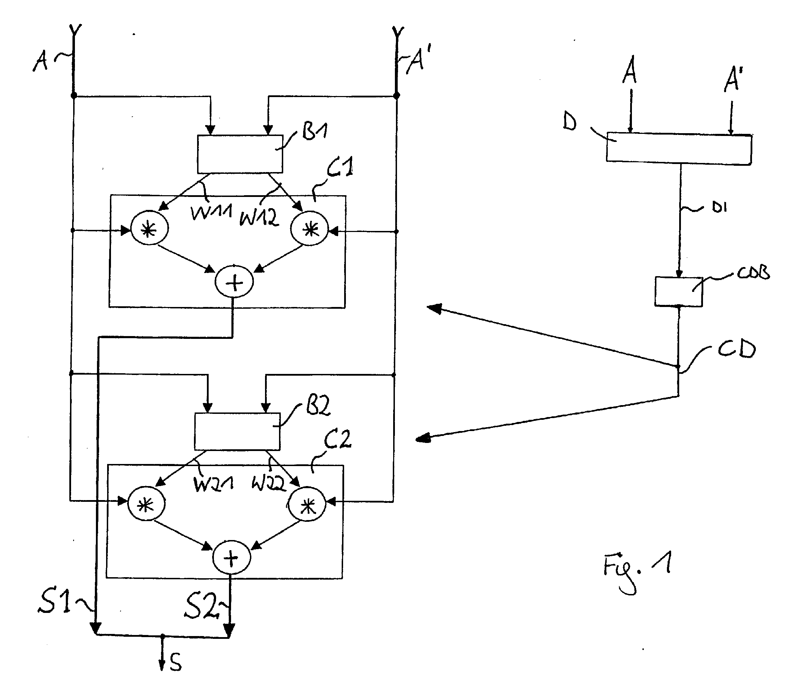

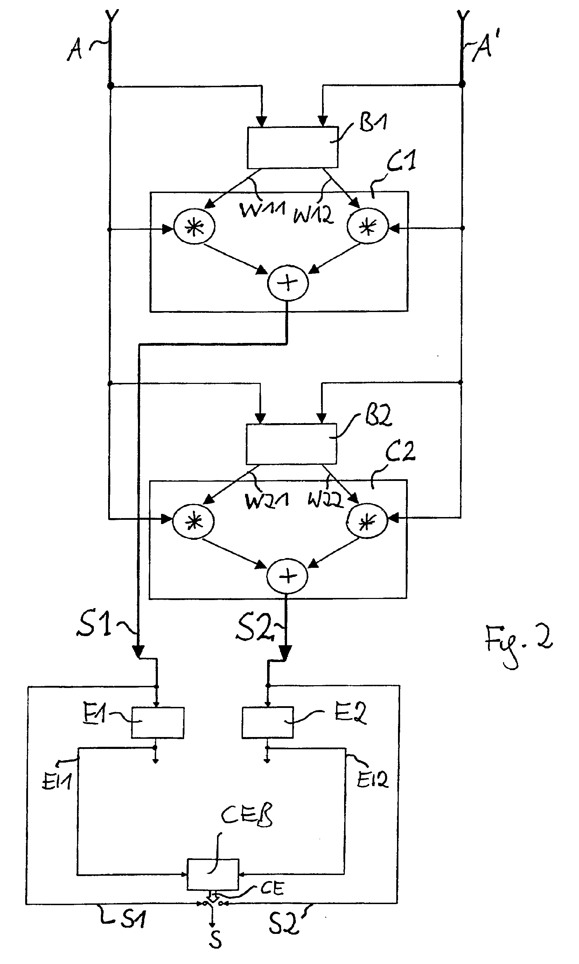

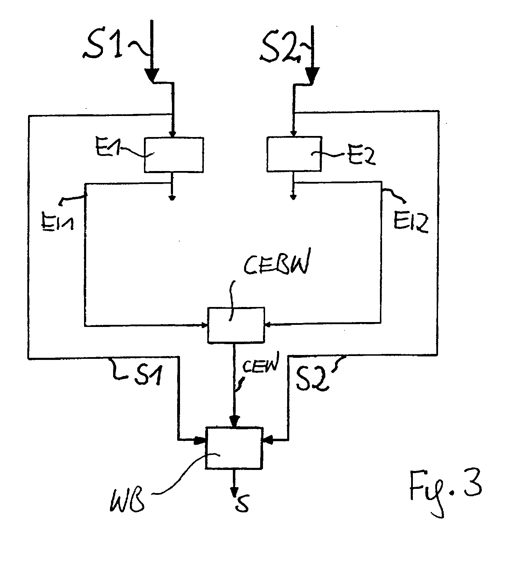

The description of the examples of figures 1 and 2 is only made for information purposes and for a better understanding of the invention. An embodiment of the invention is only described in connection with figure 3.

In a telecommunication system, e.g in a GSM telecommunication system, a base transceiver station (BTS) is able to communicate with a number of mobile stations (MS). The BTS is equipped with two antennas for sending and receiving signals to and from the MS. The two antennas are located with a distance from each other which has a value of at least some wavelengths of the transmitted signals.

Due to the two antennas, the BTS is able to receive two signals from one and the same MS. This enables the BTS to provide a so-called diversity mode in the uplink direction. In this diversity mode, the two received signals are combined into an improved signal which is then further processed.

The combination of the two received signals is performed with specific combining algorithms. This combination and any further processing of the received signals is done by digital processors.

In so-called temporal reference algorithms, a known part of the transmitted signal is used to optimize the combination of the two received signals such that the difference between the combined signal and the known part becomes a minimum. The known part may be a training sequence, a spreading code or the like.

The so-called direct matrix invertion algorithm or the so-called least squares algorithm are examples of such temporal reference algorithms. These algorithms are advantageous for overcoming a directional disturber, e.g. an interferer.

So-called spatial reference algorithms are blind estimation techniques, i.e. there is no known part or the like which is used by the algorithm. Instead, these algorithms are based on the power of the received signals and on a resulting, so-called eigenvalue analysis of a covariance matrix.

The so-called optimum ratio algorithm is an example of such a spatial reference algorithm. These algorithms are advantageous for overcoming a non-directional disturber, e.g. noise.

Figure 1 shows a first example of combining two received signals A, A' which are received by two antennas of a receiver of a BTS.

In the right hand part of figure 1, the two received signals A, A' are provided to an estimator D which produces a value or a set of values DI describing the actual condition, e.g. noise or an interferer. A subsequent compare and decision block CDB provides a decision information CD depending on this information. This decision information CD includes the information which one of two possible algorithms shall be processed for combining the received signals A, A'.

These two possible algorithms for combining the received signals A, A' are shown in the left hand part of figure 1. The two arrows of the decision information CD are pointing in the direction of the two algorithms. The decision information CD is selecting only one algorithm out of these two possible algorithms.

The two algorithms B1, B2 are both provided with the two received signals A, A' as an input. The first algorithm B1 creates weighting factors w11, w12 which are provided to a corresponding weighting block C1. In the weighting block C1, the two received signals A, A' are multiplied with the weighting factors w11, w12 and are then added up into a first resulting signal S1. The second algorithm B2 creates corresponding weighting factors w21, w22. Then, in a weighting block C2, a second resulting signal S2 is created.

Due to the selection of only one of these two possible algorithms, only the selected algorithm is processed. The other non-selected algorithm is not processed. Therefore, only the resulting signal S1 of the first algorithm B1 or the resulting signal S2 of the second algorithm B2 is available. This resulting signal S1 or S2 is then used for further processings as an improved signal S.

Summarized, in the method of figure 1, one of two algorithms B1, B2 is selected to be processed, wherein the selection is depending on the received signals A, A'.

Figure 2 shows a second example of combining two received signals A, A' which are received by two antennas of a receiver of a BTS. Features of figure 2 which are identical with figure 1, carry the same reference sign.

As already described in connection with figure 1, the two received signals A, A' are provided to the two algorithms B1, B2 which provide the resulting signals S1, S2. However, in contrast to figure 1, there is no decision to process only one of the two algorithms in figure 2.

Instead, both algorithms B1, B2 are processed so that both resulting signals S1, S2 are available. The two resulting signals S1, S2 are provided to respective quality estimators E1, E2 which produce a quality information EI1, EI2 for each of the two resulting signals S1, S2. A subsequent compare and decision block CEB compares the estimated qualities and provides a decision information CE based on this comparison. This decision information CE includes the information which one of the two resulting signals S1, S2 shall be used for further processing.

This decision information CE is then used to select that resulting signal S1 or S2 which shall be used as an improved signal S for further processing. As an example, this selection may be performed by a switch which depends on the decision information CE.

Summarized, in the method of figure 2, both algorithms B1, B2 are processed and one of the two resulting signals S1, S2 is then selected, wherein the selection is depending on the resulting signals S1, S2 themselves.

Figure 3 shows an embodiment according to the invention of combining two received signals A, A' which is based on the example of figure 2. Features of figure 3 which are identical with figure 2, carry the same reference sign.

As already described in connection with figure 2, the two received signals A, A' are provided to the two algorithms B1, B2 which provide the resulting signals S1, S2. However, in contrast to figure 2, there is no selection of one of the two resulting signals S1, S2.

Instead, the two resulting signals S1, S2 are combined. For that purpose a weight information CEW is provided to a weighting block WB. This weight information CEW is provided by a weight generation block CEBW depending on the quality information EI1, EI2.

The weighting block WB performs a combination of the two resulting signals S1, S2 wherein these signals are weighted with the weight information CEW. The result of the weighting block WB is an improved signal S which is then used for further processing.

Summarized, in the method of figure 3, both algorithms B1, B2 are processed and the two resulting signals S1, S2 are then combined, wherein the combination is performed depending on the resulting signals S1, S2 themselves.

In all three embodiments of figures 1 to 3, the two algorithms B1, B2 are supplemental to each other. In particular, the first algorithm B1 may be a temporal reference algorithm and the second algorithm B2 may be a spatial reference algorithm. This has the advantage that the first algorithm B1 is able to overcome a directional disturber, and that the second algorithm B2 is able to overcome a non-directional disturber.

In the method of figure 1, that algorithm B1 or B2 of the two algorithms B1, B2 is selected which is better suited for the actual situation. E.g., if there is a local interferer actually present, this is detected by the estimator D. Then, the compare and decision block CDB selects the first algorithm B1 to be processed in order to overcome this local interferer.

In the method of figure 2, that resulting signal S1 or S2 of the two resulting signals S1, S2 is selected which is better suited for the actual situation. E.g., if the performence is noise-limited, the decision block CEB is able to detect which one of the two algorithms B1, B2 is able to overcome this noise by comparing the quality information EI1, EI2. Then, the compare and decision block CEB selects the resulting signal S2 of the second algorithm B2.

In the method of figure 3, the two resulting signals S1 and S2 are combined such that always that one of the two algorithms B1, B2 has a higher weight which is better adapted to the present situation. E.g., if a local interferer is present, the resulting signal S1 of the first algorithm B1 will get a higher weight than the resulting signal S2 of the second algorithm B2.

It has to be mentioned that not only two antennas may be used but also more than two antennas. The received signals of these antennas are then provided to the respective algorithms.

Furthermore, it has to be mentioned that it is also possible to use other kind of algorithms for combining the received signals. As well, it is possible to use more than two algorithms for combining the received signals.

## Claims

1. A method of combining at least two received signals (A, A') of a telecommunication system, wherein a first combining algorithm (B1) is processed for providing a first resulting signal (S1), wherein a second combining algorithm (B2) is processed for providing a second resulting signal (S2), and wherein the two resulting signals (S1 and S2) are combined, **characterized in that** the quality (E1, E2) of the two resulting signals (S1, S2) is estimated and that the estimated quality of the two resulting signals (S1, S2) is used to weight (CEBW) the combination of the two resulting signals (S1 and S2), so that the combination (S) is depending on the two resulting signals (S1, S2).

2. The method of claim 1, wherein one of the two algorithms (B1) is a temporal reference algorithm and the other one of the two algorithms (B2) is a spatial reference algorithm.

3. The method of one of claims 1 or 2, wherein more than two algorithms (B1, B2) are used.

4. A receiver of a telecommunication system for combining at least two received signals (A, A'), wherein a first combining algorithm (B1) is processed for providing a first resulting signal (S1), wherein a second combining algorithm (B2) is processed for providing a second resulting signal (S2), and wherein means are provided for combining the two resulting signals (S1and S2), **characterized in that** means (E1, E2) are provided for estimating the quality of the two resulting signals (S1, S2) and that means (CEBW) are provided for using the estimated quality of the two resulting signals (S1, S2) to weight the combination of the two resulting signals (S1 and S2) so that the combination (S) depends on the two resulting signals (S1, S2).

## Patentansprüche

1. Verfahren zur Kombinierung von mindestens zwei empfangenen Signalen (A, A') eines Telekommunikationssystems, wobei ein erster Kombinationsalgorithmus (B1) verarbeitet wird, um ein erstes sich daraus ergebendes Signal (S1) bereitzustellen, wobei ein zweiter Kombinationsalgorithmus (B2) verarbeitet wird, um ein zweites sich daraus ergebendes Signal (S2) bereitzustellen, und wobei die zwei sich ergebenden Signale (S1 und S2) kombiniert werden, **dadurch gekennzeichnet, dass** die Qualität (E1, E2) der zwei sich ergebenden Signale (S1, S2) geschätzt wird, und dass die geschätzte Qualität der zwei sich ergebenden Signale (S1, S2) verwendet wird, um die Kombination der zwei sich ergebenden Signale (S1 und S2) zu gewichten (CEBW), so dass die Kombination (S) von den zwei sich ergebenden Signalen (S1, S2) abhängt.

2. Verfahren nach Anspruch 1, wobei einer der beiden Algorithmen (B1) ein zeitlicher Referenzalgorithmus und der andere der beiden Algorithmen (B2) ein räumlicher Referenzalgorithmus ist.

3. Verfahren nach einem der Ansprüche 1 oder 2, wobei mehr als zwei Algorithmen (B1, B2) verwendet werden.

4. Empfänger eines Telekommunikationssystems zur Kombinierung von mindestens zwei empfangenen Signalen (A, A') eines Telekommunikationssystems, wobei ein erster Kombinationsalgorithmus (B1) verarbeitet wird, um ein erstes sich daraus ergebendes Signal (S1) bereitzustellen, wobei ein zweiter Kombinationsalgorithmus (B2) verarbeitet wird, um ein zweites sich daraus ergebendes Signal (S2) bereitzustellen, und wobei Mittel bereitgestellt werden, um die zwei sich ergebenden Signale (S1 und S2) zu kombinieren, **dadurch gekennzeichnet, dass** Mittel (E1, E2) bereitgestellt werden, um die Qualität der zwei sich ergebenden Signale (S1, S2) zu schätzen, und dass Mittel (CEBW) bereitgestellt werden, um die geschätzte Qualität der zwei sich ergebenden Signale (S1 und S2) zu verwenden, um die Kombination der zwei sich ergebenden Signale (S1 und S2) zu gewichten, so dass die Kombination (S) von den zwei sich ergebenden Signalen (S1, S2) abhängt.

## Revendications

1. Procédé de combinaison d'au moins deux signaux reçus (A, A') d'un système de télécommunication, dans lequel un premier algorithme de combinaison (B1) est traité pour fournir un premier signal résultant (S1), dans lequel un deuxième algorithme de combinaison (B2) est traité pour fournir un deuxième signal résultant (S2), et dans lequel les deux signaux résultants (S1 et S2) sont combinés, **caractérisé en ce que** la qualité (E1, E2) des deux signaux résultants (S1, S2) est estimée et **en ce que** la qualité estimée des deux signaux résultants (S1, S2) est utilisée pour pondérer (CEBW) la combinaison des deux signaux résultants (S1 et S2), de sorte que la combinaison (S) dépende des deux signaux résultants (S1, S2).

2. Procédé selon la revendication 1, dans lequel un des deux algorithmes (B1) est un algorithme de référence temporelle et l'autre des deux algorithmes (B2) est un algorithme de référence spatiale.

3. Procédé selon l'une des revendications 1 et 2, dans lequel plus de deux algorithmes (B1, B2) sont utilisés.

4. Récepteur d'un système de télécommunication pour combiner au moins deux signaux reçus (A, A'), dans lequel un premier algorithme de combinaison (B1) est traité pour fournir un premier signal résultant (S1), dans lequel un deuxième algorithme de combinaison (B2) est traité pour fournir un deuxième signal résultant (S2), et dans lequel des moyens sont fournis pour combiner les deux signaux résultants (S1 et S2), **caractérisé en ce que** des moyens (E1, E2) sont fournis pour estimer la qualité des deux signaux résultants (S1, S2) et **en ce que** des moyens (CEBW) sont fournis pour utiliser la qualité estimée des deux signaux résultants (S1 et S2) pour pondérer la combinaison des deux signaux résultants (S1 et S2) de sorte que la combinaison (S) dépende des deux signaux résultants (S1, S2).
